# EUROPEAN PATENT APPLICATION

(11) **EP 4 716 072 A1**
(43) Date of publication of application: **25.03.2026**
(21) Application number: 24845485.2
(22) Date of filing: 17.07.2024
(51) Int. Cl.: H02K 15/02

(54) **MANUFACTURING METHOD FOR ROTARY ELECTRIC MACHINE PROTECTION RING AND MANUFACTURING DEVICE FOR ROTARY ELECTRIC MACHINE PROTECTION RING**

(30) Priority: 27.07.2023 JP 2023122311
(71) Applicant: Toray Industries, Inc., Tokyo 103-8666 (JP)
(72) Inventor: HOSOKAWA, Naofumi, Nagoya-shi, Aichi 455-8502 (JP); MIYAZAKI, Yusuke, Iyo-gun, Ehime 791-3193 (JP); SUENAGA, Kazumasa, Iyo-gun, Ehime 791-3193 (JP); SANO, Kentaro, Iyo-gun, Ehime 791-3193 (JP); SUETSUGU, Kota, Nagoya-shi, Aichi 455-8502 (JP)
(74) Representative: Prüfer & Partner mbB Patentanwälte · Rechtsanwälte
(86) International application number: PCT/JP2024/025572
(87) International publication number: WO 2025/023105

(57) **Abstract**

The purpose of the present invention is to, in a method for manufacturing a rotary electric machine protection ring, make it possible to obtain a laminate by, when a fiber-reinforced composite material is wound around the outside of a rotor, causing the material to travel with a high tension to reduce fiber breakage in a path up to a winding starting point of the material, thereby winding the material around the rotor with high tension. To achieve this purpose, the method and apparatus for manufacturing a rotary electric machine protection ring are configured such that: tensile stress is applied to a tape-shaped material including a resin and a reinforcing fiber tow and the tape-shaped material is caused to travel while being brought into contact with a path-forming member; a tensile stress of 300 MPa or more is applied to the tape-shaped material in a path in an area from a certain point in a traveling path to the winding starting point; and in the path in the area in which the tensile stress of 300 MPa or more is applied, the maximum distance of a section in which the tape-shaped material does not come into contact with the path-forming member is 500 mm or less.

## Description

### TECHNICAL FIELD

The present invention relates to a method for manufacturing a rotary electric machine protection ring that can be used for protecting a rotor of a rotary electric machine such as a generator or an electric motor. The present invention further relates to an apparatus for manufacturing a rotary electric machine protection ring.

### BACKGROUND ART

In recent years, in order to improve the performance of a rotary electric machine, the rotary electric machine is required to rotate at a high speed with a rotor of the rotary electric machine as an axis. Examples of the structure of the rotary electric machine include a surface permanent magnet (SPM) type in which a permanent magnet is disposed on the outer circumferential side of a rotor and an internal permanent magnet (IPM) type in which a permanent magnet is embedded in a rotor. When such a rotary electric machine is rotated at a high speed, the permanent magnet disposed on the outer circumference may fall off from the rotor or the rotor itself may be damaged by a centrifugal force.

Patent Document 1 describes a method for winding a carbon fiber by applying tension (tensile stress) to the carbon fiber in advance when the carbon fiber is tightly wound around the outer circumference of a rotor of a rotary electric machine in order to prevent destruction and deformation of the rotary electric machine associated with high-speed rotation.

In addition, Patent Document 2 describes a method for using a frictional resistance applying member by an elastic roller in order to wind a carbon fiber filament around a liner with high tension. The liner is a container for accommodating a pressurized fluid. A carbon fiber filament is wound around an outer circumference of the liner with high tension to prevent loosening of the carbon fiber filament caused by a difference in linear expansion coefficient of a member.

### PRIOR ART DOCUMENTS

### PATENT DOCUMENTS

Patent Document 1: Japanese Patent Laid-open Publication No. JP 60-102850 A
Patent Document 2: Japanese Patent Laid-open Publication No. 2005-238688 A

### SUMMARY OF THE INVENTION

### PROBLEMS TO BE SOLVED BY THE INVENTION

The invention described in Patent Document 1 does not mention a specific tension value or a method for applying tension when the carbon fiber is tightly wound around the outer circumference of the rotor with tension being applied in advance. Therefore, tension design cannot be realized, and further, a problem of a decrease in the number of rotations arises.

In the invention described in Patent Document 2, about 5 kg/mm² (about 50 MPa) is described as an example as a general tension when a pressure vessel is formed by winding carbon fibers, and about 20 kg/mm² (about 200 MPa) is described as an example of a high tension. However, there is a problem that the tension is not sufficient for the rotor of the rotary electric machine to prevent destruction and deformation of the rotary electric machine associated with high-speed rotation, and that the number of rotations of the rotary electric machine is limited. Furthermore, when the carbon fiber is caused to travel with a higher tension being applied thereto, the breakage of the traveling carbon fiber may occur in a path including a path up to a winding starting point.

In the present invention, a ring-shaped member on the outer circumference used to protect the rotor of the rotary electric machine is referred to as a rotary electric machine protection ring. The present invention solves a problem for achieving, when a rotary electric machine protection ring made of a fiber-reinforced composite material wound around the outside of a rotor of a rotary electric machine is manufactured, winding of the material around the rotor with very high tension. That is, an object of the present invention is to obtain a high-performance rotary electric machine protection ring in which a tape-shaped material including a resin and a reinforcing fiber tow can be normally wound around a rotor even with a high tension by reducing the occurrence of fiber breakage in a traveling step including a path up to a winding starting point when the tape-shaped material is caused to travel with high tension. Accordingly, an object of the present invention is to provide a method and apparatus for manufacturing a rotary electric machine protection ring with which it is possible to prevent displacement generated during operation of the rotary electric machine and to consequently improve the output density of the rotary electric machine.

### SOLUTIONS TO THE PROBLEMS

As a result of intensive studies to solve the above problems, the present inventors have found a method for manufacturing a rotary electric machine protection ring and an apparatus for manufacturing a rotary electric machine protection ring described below, and have completed the present invention.

The present invention provides a method for manufacturing a rotary electric machine protection ring, the method including: causing a tape-shaped material including a resin and a reinforcing fiber tow to travel along a predetermined path defined by a plurality of members (hereinafter referred to as path-forming members) constituting a path by applying a tensile stress to the tape-shaped material while bringing the tape-shaped material into contact with the path-forming members; and then annularly winding the tape-shaped material a plurality of times to form a cylindrical laminate, wherein a tensile stress of 300 MPa or more is applied to the tape-shaped material in a path in an area from a certain point in the path to the winding starting point, and a maximum distance of a section in which the tape-shaped material does not come into contact with the path-forming members in the path in the area in which the tensile stress of 300 MPa or more is applied is 500 mm or less.

Further, in the method for manufacturing a rotary electric machine protection ring: a first path-forming member (excluding a path-forming member having an outer circumference on which the winding starting point is located) that is located upstream of the winding starting point and that is closest to the winding starting point is defined as a first path-forming member; in a path from the first path-forming member up to the winding starting point, a tensile stress of 300 MPa or more is applied to the tape-shaped material; and the tape-shaped material has a traveling length of 500 mm or less in which the tape-shaped material aerially travels without contacting the first path-forming member. Here, the path-forming member having an outer circumference on which the winding starting point is located is, when the path-forming member is constituted by rolls, a roll that is close to or in contact with the core via the tape-shaped material and that has an outer circumference on which a point where the material is started to be wound around the core is located, and in other words, is a roll having one point on the outer circumference that serves as the winding starting point at which the material is started to be wound around the core.

The present invention also provides, as an apparatus for manufacturing a rotary electric machine protection ring, an apparatus for manufacturing a rotary electric machine protection ring including: an unwinding device that unwinds a bobbin around which a tape-shaped material including a resin and a reinforcing fiber tow is wound; a plurality of path-forming members that defines a path on which the unwound tape-shaped material travels; and a winding device that holds a columnar or substantially columnar core, the tape-shaped material being annularly wound around an outer circumference of the core a plurality of times from a winding starting point by rotation of the columnar or substantially columnar core, the apparatus including a first path-forming member (excluding a path-forming member having an outer circumference on which the winding starting point is located) that is located upstream of the winding starting point and that is the closest to the winding starting point in a path up to the winding starting point, the apparatus having a traveling section in which a tensile stress of 300 MPa or more is applied to the tape-shaped material between the first path-forming member and the winding starting point, wherein the traveling section has a traveling length of 500 mm or less.

### EFFECTS OF THE INVENTION

With the method for manufacturing a rotary electric machine protection ring according to the present invention, it is possible to apply a required high tensile stress to the material including a resin and a reinforcing fiber tow for constituting a cylindrical laminate, and further, it is possible to reduce fiber breakage that may occur during traveling of the tape-shaped material by applying a high tensile stress. In the rotary electric machine protection ring obtained according to the present invention, the displacement of the ring during the operation of the rotary electric machine is prevented, whereby the output density of the rotary electric machine can be further improved.

### BRIEF DESCRIPTION OF THE DRAWINGS

Fig. 1 is a perspective view of a rotary electric machine protection ring according to an embodiment of the present invention.
Fig. 2 is a schematic diagram of an apparatus for manufacturing a rotary electric machine protection ring according to the embodiment of the present invention.
Fig. 3 is a schematic diagram of an apparatus for manufacturing a rotary electric machine protection ring according to the embodiment of the present invention, the apparatus being provided with a cooling mechanism.
Fig. 4 is a schematic diagram of an apparatus for manufacturing a rotary electric machine protection ring according to the embodiment of the present invention, the apparatus being provided with a heating mechanism.
Fig. 5 is a schematic diagram illustrating a winding direction of a material including a resin and reinforcing fibers with respect to a core at the time of forming a laminate according to the embodiment of the present invention.

### EMBODIMENTS OF THE INVENTION

Hereinafter, the configuration of the rotary electric machine protection ring according to the present invention and the method and apparatus for manufacturing the rotary electric machine protection ring will be described.

### (Configuration of rotary electric machine protection ring)

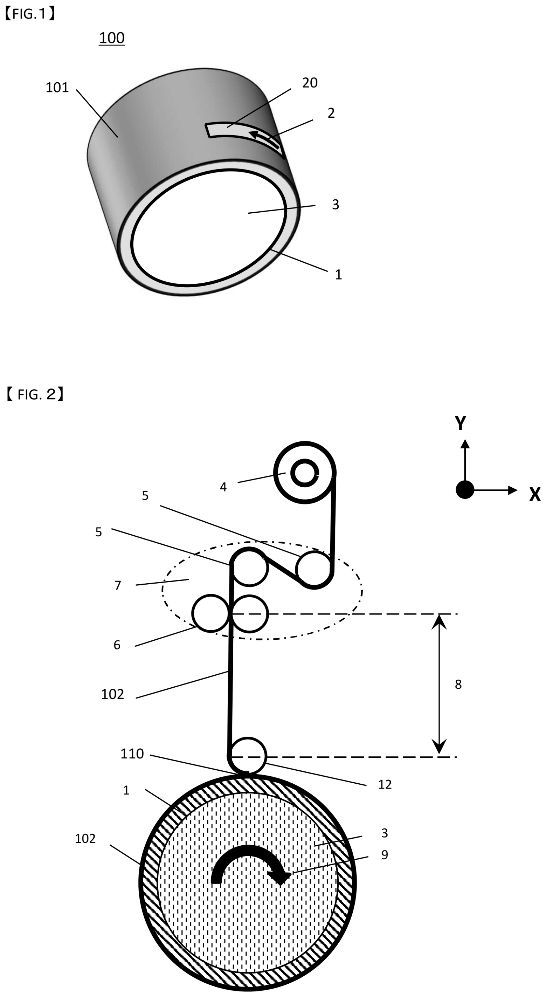

As illustrated in Fig. 1, the rotary electric machine protection ring according to the present invention is formed by winding a tape-shaped material including a resin and a reinforcing fiber tow around a core 3 a plurality of times in an annular shape to form a cylindrical laminate 1, the core 3 being a member to be finally tightened, such as a rotor of a rotary electric machine. An arrow 2 indicates the winding direction of the tape-shaped material, and the region indicated in a lighter color than that of the periphery indicates a winding end portion 20.

The material including a resin and a reinforcing fiber tow may have a tape shape or a sheet shape formed by impregnating the reinforcing fiber with the resin. The tape-shaped material may be continuously wound from a winding starting point to a winding end point, or may be wound a plurality of times so that the material is discontinuously wound. In the present invention, the laminate 1 may represent a mode after the tape-shaped material wound and laminated is molded, or may represent a mode before the tape-shaped material wound and laminated is molded in a manufacturing process. The tape-shaped material may also be referred to as a fiber tow.

The type of the reinforcing fiber tow is not particularly limited, and glass fibers, carbon fibers, aramid fibers, boron fibers, alumina fibers, silicon carbide fibers, and the like can be used. Two or more kinds of these fibers may be mixed and used. From the viewpoint of obtaining a lightweight fiber-reinforced composite material having high stiffness, carbon fibers are preferably used. The number of fibers constituting the fiber tow can be 1,000 to 50,000, for example.

The resin used for the fiber-reinforced composite material is not particularly limited, and a thermosetting resin such as an epoxy resin, an unsaturated polyester resin, a phenol resin, a vinyl ester resin, or a cyanate ester resin can be used in an uncured state. In addition, a thermoplastic resin such as a polyaryletherketone resin, a polyetheretherketone resin, a polyetherketoneketone resin, a polyetherimide resin, a polyphenylene sulfide resin, a polyethersulfone resin, a polyamide resin, or a polycarbonate resin can also be used. Two or more kinds of these resins may be mixed and used.

The rotary electric machine protection ring according to the present invention is preferably constituted by the laminate 1 obtained by annularly winding a tape-shaped material a plurality of times, the tape-shaped material being formed by impregnating a reinforcing fiber tow with a resin. As such a tape-shaped material, a towpreg obtained by impregnating a reinforcing fiber tow with a resin in advance or a slit tape of a prepreg may be used, or a material obtained by impregnating a reinforcing fiber tow with a resin during a process with a method such as filament winding may be used.

The width of the tape-shaped material is not particularly limited, but is preferably 1 mm to 20 mm. The reason thereof is that the use of a material having a width of 1 mm to 20 mm makes it easy to form a laminate by winding the material.

The rotary electric machine protection ring according to the present invention preferably has an inner diameter of 1 cm to 25 cm and has a thickness of 0.1 mm to 5.0 mm. When the thickness of the ring is 0.1 mm to 5.0 mm, the effect of preventing displacement of the rotary electric machine protection ring is enhanced, and the output density of the rotary electric machine can be further improved.

### (Method for manufacturing rotary electric machine protection ring and apparatus configuration)

In the present invention, in an apparatus for manufacturing a cylindrical rotary electric machine protection ring made of a material including a resin and a reinforcing fiber tow, a predetermined path is formed and defined by members (path-forming members) constituting a path such as mainly rolls or guides from a bobbin 4 around which a tape-shaped material including a resin and a reinforcing fiber tow is wound to a winding starting point at a core 3 which is a member to be finally tightened such as a rotor of a rotary electric machine, as illustrated in Fig. 2.

Fig. 2 is a schematic diagram illustrating an example of an apparatus for manufacturing a rotary electric machine protection ring. The apparatus for manufacturing a rotary electric machine protection ring in Fig. 2 is one embodiment of the present invention, and the present invention is not limited to Fig. 2. In Fig. 2, a tape-shaped material including a resin and a reinforcing fiber tow is drawn out from the bobbin 4 (a driving device or the like is not illustrated), a path for the traveling tape-shaped material 102 including a resin and a reinforcing fiber tow is determined by a multistage roll 5, a stress applying mechanism 7, a nip roll 6, and a touch roll 12, and the tape-shaped material is wound around the core 3 from a winding starting point 110 to form the laminate 1. The path on which the tape-shaped material travels until reaching the winding starting point has a path-forming member closest to the winding starting point, that is, a first path-forming member, on the upstream side of the winding starting point. In the path within an area from the first path-forming member to the winding starting point, the tape-shaped material 102 travels in the air. As the first path-forming member, a path-forming member having an outer circumference on which the winding starting point is located is excluded.

In Fig. 2, the core 3 rotates in a rotation direction indicated by an arrow 9, and the traveling tape-shaped material 102 including a resin and a reinforcing fiber tow is wound around the core 3. The touch roll 12 is disposed close to or in contact with the core 3 or the laminate 1, and even when the touch roll 12 is in pressure contact with the core or the laminate 1 to form a nip therebetween by external stress, a slight gap, for example, a gap of 0.5 mm to 30 mm, may be formed between the touch roll 12 and the laminate 1. Here, in the case of determining the roll having an outer circumference on which the winding starting point is located, the touch roll 12 in the present invention that is close to or in contact with the laminate 1 is considered to be a roll having an outer circumference on which the winding starting point is located, because the time during which the traveling tape-shaped material passes through the winding starting point is considered to be substantially the same between the case where the roll is in contact with the laminate 1 and the case where a slight gap of several 10 mm is formed.

In addition, as long as the touch roll 12 is a roll that is close to or in contact with the core 3 or the laminate 1, the touch roll may be disposed at a starting portion at which the traveling tape-shaped material 102 including a resin and a reinforcing fiber tow is started to be wound around the core 3, or may be disposed on a portion other than the starting portion on the circumference of the core 3 or the laminate 1. When the touch roll 12 is disposed at the winding starting portion, the winding starting point 110 is formed on the outer circumference of the touch roll 12.

In the method for manufacturing the laminate 1, the tape-shaped material including a reinforcing fiber tow or a resin and a reinforcing fiber tow is unwound from the bobbin 4, is allowed to travel along the path while being in contact with a roll, a guide, or the like, and then is wound around the core 3 in an annular shape a plurality of times to form the laminate 1. That is, the tape-shaped material including a reinforcing fiber tow or a resin and a reinforcing fiber tow is wound in layers around the outer circumference of the core 3. In the present invention, a tensile stress of 300 MPa or more is applied to the tape-shaped material by the stress applying mechanism 7 in a path from a certain point (including a point where the tape-shaped material starts to travel) in a path until the traveling tape-shaped material reaches the winding starting point to the winding starting point. Here, in the region where such a high tensile stress is applied, the path is formed such that the maximum distance 8 at which the material does not come into contact with the path-forming member is 500 mm or less.

Examples of the distance of a section where the tape-shaped material does not come into contact with the path-forming member in the path from a certain point in the path up to the winding starting point to the winding starting point include the distance between the multistage roll 5 and the multistage roll 5 downstream thereof, the distance between the multistage roll 5 and the nip roll 6, the distance between the nip roll 6 and the touch roll 12, and the distance between the touch roll 12 and the core 3 in Fig. 2. When the aerial traveling length of the section where the distance is the maximum is 500 mm or less, a required high tensile stress can be applied, and fiber breakage occurring during the traveling of the tape-shaped material can be reduced by applying such a high tensile stress. Aerial traveling means that the tape-shaped material travels in the air without contacting the path-forming member.

Further, it is preferable that, in a path from the first path-forming member (excluding a path-forming member having an outer circumference on which the winding starting point is located) that is located upstream of the winding portion, that is, the winding starting point, and that is the closest to the core 3, that is, the winding starting point, to the winding starting point, a tensile stress of 300 MPa or more is applied to the tape-shaped material, and a traveling length of the tape-shaped material that aerially travels is 500 mm or less.

Between the path-forming member and the winding starting point, the tape-shaped material is stretched across the rolls and travels in the air without contacting the path-forming member. The distance between the first path-forming member and the winding starting point refers to a distance from a point where the tape-shaped material is separated from the first path-forming member to the winding starting point. Note that a roll (the touch roll 12 in Fig. 2) having an outer circumference on which the winding starting point is located is excluded, but a section in which the material travels on the outer circumference is added to and included in the distance to the winding starting point. A point at which the tape-shaped material is separated from the first path-forming member is specified as a state in which the tape-shaped material is stretched.

The present inventors have found that, due to the resin before being cured having low rigidity of the resin that transmits stress by the reinforcing fibers, the tensile strength of the tape material including the resin and the reinforcing fiber tow is easy to be improved as the span length is shorter. The present inventors have also found that the reinforcing fiber is likely to be broken when the span length is increased. That is, when the maximum distance of the traveling section in which a high tensile stress is applied is set to 500 mm or less, a high tensile stress of 300 MPa or more is applied to the tape-shaped material, and the occurrence of fiber breakage can be reduced.

The bobbin 4 is formed by winding the material around an inner tube into a bobbin shape. In order to separate the material from the bobbin without resistance, a film may be attached to the material. Further, metal may be used for the inner tube of the bobbin.

The stress applying mechanism 7 that applies tensile stress to the material is not particularly limited, and examples thereof include application of torque to the bobbin 4 by a brake or the like, application of frictional resistance to the material with the multistage roll 5, and application of frictional resistance to the material with the nip roll 6. Figs. 2 to 4 illustrate an example in which the stress applying mechanism 7 using the multistage roll 5 is provided in the path from the bobbin to the core, and the tension applied to the traveling material increases every time the material passes through the roll. The tape-shaped material is applied with a tensile stress of 300 MPa or more by the stress applying mechanism 7, travels to the first path-forming member on the downstream side, and is annularly wound around the core 3 a plurality of times from the winding starting point.

A point at which the stress applied to the material by any of the stress applying mechanisms 7 is 300 MPa or more is the "point in the path up to the winding starting point". When the stress applied to the material once falls below 300 MPa after reaching 300 MPa or more and again reaches 300 MPa or more, the two points at which the stress reaches 300 MPa or more are the "certain points". In either case, the material is caused to travel with a device in which the maximum distance 8 at which the material does not come into contact with the path-forming member is 500 mm or less in the section of the path where the stress applied to the material is 300 MPa or more. The situation where the stress applied to the tape-shaped material is 300 MPa means that it is sufficient that the stress is 300 MPa in any section of the path, and the stress may be 300 MPa in the entire section or a part of the section.

The tensile stress is preferably 500 MPa or more, more preferably 1000 MPa or more in order to prevent deformation of the core 3 during rotation. In addition, the tensile stress is desirably 6000 MPa or less from the limit of the tensile strength of the reinforcing fiber tow. The maximum distance 8 may be designed so as not to exceed a predetermined range in the range of the tensile stress higher than 300 MPa.

The path-forming member described above is mainly a roll or a guide, and includes a member that comes into contact with the material and defines a traveling path thereof. The roll includes both a free roll and a drive roll. The roll also includes a touch roll placed close to or in contact via a core or material, but is excluded from the first path-forming member in the present invention. The above-described stress applying mechanism 7 can be a path-forming member. It is to be noted that the path-forming member is not limited to only rolls and guides. A measuring instrument such as a tensiometer or a speedometer generally does not define the traveling path of the material, although it comes into contact with the material on the traveling path. Therefore, the measuring instrument is not included in the path-forming member unless it is clear that the measuring instrument defines the traveling path of the material.

It is preferable that the maximum distance 8 is shorter in order to prevent rupture or partial breakage of the material. Specifically, the maximum distance is preferably 500 mm or less, more preferably 300 mm or less, and still more preferably 200 mm or less. The lower limit of the maximum distance 8 is not particularly limited, but may be set to 1 mm or more, for example. When the material is caused to travel with a high tension exceeding that in the conventional technique, the maximum distance 8 longer than a predetermined range may lead to an increase in rupture of the material and breakage of the fiber. The path constituting the maximum distance 8 is generally linear because there is no member such as a roll or a guide that bends the path of the material, but is not necessarily limited thereto.

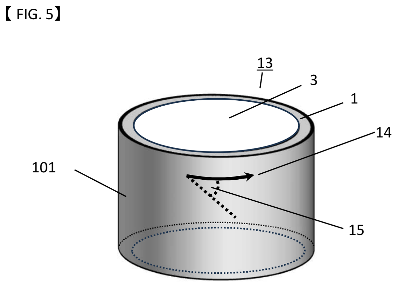

The core 3 is a member to be finally tightened by the material, such as a rotor of a rotary electric machine. As illustrated in Fig. 5, the laminate 1 may be formed by winding the material including a resin and a reinforcing fiber tow in layers at the same height when an end face 13 of the core 3 is placed in the vertical direction, that is, by winding the material in layers in a reference direction when a circumferential direction 14 (with an angle 15 of 0°) of the core 3 is defined as the reference direction, or may be formed by spirally winding the material with the angle 15 being changed from the reference direction. The material may be wound by rotating the core 3 in the rotation direction 9 of the core.

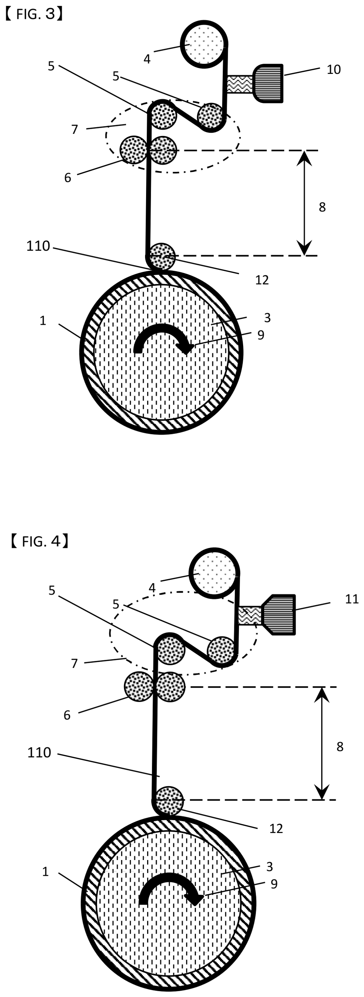

When an uncured thermosetting resin is used as the resin constituting the material, a rotary electric machine protection ring can be obtained by applying heat and pressure to the laminate 1 with a method such as autoclave molding or tape wrapping molding to cure the thermosetting resin. As illustrated in Fig. 3, before or during a stress applying step, at least a part of the material, preferably the entire material, may be cooled from a higher temperature state to 20°C or lower, preferably 15°C or lower, and more preferably 5°C or lower by a cooling mechanism 10. When the material using the thermosetting resin is cooled, the viscosity may be improved by suppressing the molecular motion, and fiber breakage may be reduced. Thus, this is preferable.

In addition, as illustrated in Fig. 4, at least a part of the material, preferably the entire material, may be heated by a heating mechanism 11 before or during the stress applying step. When the material using the thermosetting resin is heated, the viscosity may be improved by the progress of a curing reaction, and fiber breakage may be reduced. Thus, this is preferable. The term "before or during the stress applying step" as used herein refers to a stage before or during the application of a tensile stress of 300 MPa or more to the material. For example, when the above-described multistage roll 5 or nip roll 6 is used as the stress applying mechanism 7, the term refers to a stage before or during the passage of the material through the member. When the material using the thermosetting resin is heated, the material is preferably heated at a temperature between thermal curing temperature and a temperature 100°C lower than the thermal curing temperature. For example, when a material that is thermally cured at 150°C is used, the material is preferably heated at 50°C to 150°C by the heating mechanism 11.

In a case where a thermoplastic resin is used as the material, the material is wound, and at the same time, is heated and welded with a laser or the like when the material is layered. Thus, the rotary electric machine protection ring can be obtained simultaneously with the formation of the laminate 1.

### EXAMPLES

Hereinafter, a manufacturing example and a comparative example of a specific molding method of the rotary electric machine protection ring according to the present invention will be described.

### [EXAMPLE 1]

As a tape-shaped material, a towpreg obtained by impregnating a carbon fiber tow (T700S-12K) with an epoxy-based resin was prepared. The towpreg had a resin content of 30 mass%. In order to simulate a fiber path in a case where a maximum distance of a section in which the tape-shaped material did not come into contact with a path-forming member was set to 500 mm, an Instron universal testing machine (manufactured by Instron) was used to assess whether or not the tape-shaped material had partial fiber breakage when a tensile stress was applied to the tape-shaped material up to 300 MPa under the condition where a span was set to 500 mm, a crosshead speed was set to 2.5 mm/min, and the number of samples n was set to 3. The result shows that no partial fiber breakage occurred even after the test.

This reveals that, since the tape-shaped material can be wound around the outer circumference of the rotor in the rotary electric machine with high tensile stress, it is possible to manufacture a rotary electric machine protection ring capable of preventing displacement generated during rotational operation.

### [EXAMPLE 2]

A tape-shaped material same as that used in Example 1 was used, and a tensile stress same as that in Example 1 was applied to the tape-shaped material using the same testing machine as in Example 1 except that the span was set to 400 mm. As a result of assessing whether or not the tape-shaped material had partial fiber breakage after the test, no partial fiber breakage occurred.

### [EXAMPLE 3]

A tape-shaped material same as that used in Example 1 was used, and a tensile stress same as that in Example 1 was applied to the tape-shaped material using the same testing machine as in Example 1 except that the span was set to 100 mm. As a result of assessing whether or not the tape-shaped material had partial fiber breakage after the test, no partial fiber breakage occurred. Further, the tensile stress was applied up to 600 MPa, but partial fiber breakage did not occur.

### [COMPARATIVE EXAMPLE 1]

A tape-shaped material same as that used in Example 1 was used, and a tensile stress same as that in Example 1 was applied to the tape-shaped material using the same testing machine as in Example 1 except that the span was set to 600 mm. The tape-shaped material after the test had partial fiber breakage.

### [COMPARATIVE EXAMPLE 2]

A tape-shaped material same as that used in Example 1 was used, and a tensile stress same as that in Example 1 was applied to the tape-shaped material using the same testing machine as in Example 1 except that the span was set to 700 mm. As a result of assessing whether or not the tape-shaped material had partial fiber breakage, partial fiber breakage occurred.

### [EXAMPLE 4]

A tape-shaped material same as that used in Example 1 was wound to form a laminate using the apparatus for manufacturing a rotary electric machine protection ring illustrated in Fig. 2. In Fig. 2, a columnar rotor was disposed on the core 3, and the tape-shaped material was wound around the outer circumference. A touch roll 12 is disposed on the core 3, and the tape-shaped material travels on the touch roll 12, passes through a winding starting point, and is wound around the core 3. The touch roll 12 and the laminate of the tape-shaped material wound around the core 3 had a very narrow gap (1 mm). In this case, the roll serving as the first path-forming member was the closest roll on the upstream side as viewed from the core 3 except for the touch roll 12 having an outer circumference on which the winding starting point 110 was located, that is, the roll serving as the first path-forming member was the roll denoted by reference numeral 6 in Fig. 2. The distance between the first path-forming member and the winding starting point (traveling length for aerial traveling) was 300 mm.

A path from the bobbin to the core 3 was formed through a plurality of path-forming members constituting a path and a stress applying step. The unwinding speed was set to 5 m/min, and a tensile stress of 300 MPa was applied using the multistage roll 5 and the nip roll 6 in an area with the maximum distance 8 in which the material did not come into contact with the path-forming member in the region where the high tension was applied. The laminate thus molded had a diameter of 14 cm, a width of 10 cm, and a thickness of 2.0 mm.

As a result of assessing whether or not the tape-shaped material had partial fiber breakage, no partial fiber breakage occurred. The rotary electric machine protection ring around which the tape-shaped material was wound was wound around the core with high tension, and a satisfactory laminate was obtained.

### INDUSTRIAL APPLICABILITY

The rotary electric machine protection ring according to the present invention is mounted on the outside of a rotor of a rotary electric machine such as a generator or an electric motor, and can be used for the purpose of protecting the rotor including a magnet from being broken by a centrifugal force when the rotary electric machine operates. According to the present invention, it is also possible to provide a rotary electric machine including the rotary electric machine protection ring and the rotor. The present invention can similarly be used for the purpose of protecting a flywheel intended for energy storage from being broken by a centrifugal force.

For example, the present invention can be preferably applied to the SPM type electric motor described above, and prevents a permanent magnet from falling off from a rotor due to centrifugal force during operation, so that the rotary electric machine can be rotated at a high speed. Further, the present invention can also be preferably applied to the IPM type electric motor, a winding type electric motor using an electromagnet, a reluctance type electric motor using magnetic resistance, an induction type electric motor not using a magnet, and the like. Since destruction of an electromagnetic steel sheet or the like due to a centrifugal force during operation is prevented, the rotary electric machine can be rotated at a high speed.

### DESCRIPTION OF REFERENCE SIGNS

1: Laminate
100: Rotor of rotary electric machine
101: Rotary electric machine protection ring
102: Tape-shaped material including resin and reinforcing fiber tow
110: Winding starting point
2: Winding direction of tape-shaped material
3: Core
4: Bobbin
5: Multistage roll
6: Nip roll
7: Stress applying mechanism
8: Maximum distance at which material does not contact path-forming member in region where high tension is applied
9: Rotation direction of core
10: Cooling mechanism
11: Heating mechanism
12: Touch roll
13: End face
14: Circumferential direction
15: Winding angle from reference direction
20: Winding end portion

## Claims

1. A method for manufacturing a rotary electric machine protection ring, the method comprising: causing a tape-shaped material including a resin and a reinforcing fiber tow to travel along a predetermined path defined by a plurality of members (hereinafter referred to as path-forming members) constituting a path by applying a tensile stress to the tape-shaped material while bringing the tape-shaped material into contact with the path-forming members; and then annularly winding the tape-shaped material a plurality of times to form a cylindrical laminate, wherein
a tensile stress of 300 MPa or more is applied to the tape-shaped material in a path in an area from a certain point in the path to the winding starting point, and
a maximum distance of a section in which the tape-shaped material does not come into contact with the path-forming members in the path in the area in which the tensile stress of 300 MPa or more is applied is 500 mm or less.

2. The method for manufacturing a rotary electric machine protection ring according to claim 1, wherein
a path-forming member (excluding a path-forming member having an outer circumference on which the winding starting point is located) that is located upstream of the winding starting point and that is closest to the winding starting point is defined as a first path-forming member,
in a path from the first path-forming member up to the winding starting point,
a tensile stress of 300 MPa or more is applied to the tape-shaped material, and
the tape-shaped material has a traveling length of 500 mm or less in which the tape-shaped material aerially travels without contacting the first path-forming member.

3. The method for manufacturing a rotary electric machine protection ring according to claim 1 or 2, further comprising a stress applying step of applying a stress to the tape-shaped material traveling on the path by the path-forming members to increase the tensile stress applied to the tape-shaped material to 300 MPa or more.

4. The method for manufacturing a rotary electric machine protection ring according to claim 3, wherein the resin is an uncured thermosetting resin, and at least a part of the tape-shaped material is cooled to 20°C or less before or during the stress applying step.

5. The method for manufacturing a rotary electric machine protection ring according to claim 3, wherein the resin is an uncured thermosetting resin, and at least a part of the tape-shaped material is heated before or during the stress applying step.

6. An apparatus for manufacturing a rotary electric machine protection ring, the apparatus comprising:
an unwinding device that unwinds a bobbin around which a tape-shaped material including a resin and a reinforcing fiber tow is wound;
a plurality of path-forming members that defines a path on which the unwound tape-shaped material travels; and
a winding device that holds a columnar or substantially columnar core, the tape-shaped material being annularly wound around an outer circumference of the core a plurality of times from a winding starting point by rotation of the columnar or substantially columnar core,
the apparatus including a first path-forming member (excluding a path-forming member having an outer circumference on which the winding starting point is located) that is located upstream of the winding starting point and that is the closest to the winding starting point in a path up to the winding starting point,
the apparatus having a traveling section in which a tensile stress of 300 MPa or more is applied to the tape-shaped material between the first path-forming member and the winding starting point, wherein the traveling section has a traveling length of 500 mm or less.

7. The apparatus for manufacturing a rotary electric machine protection ring according to claim 6, further comprising a stress applying mechanism that applies a tensile stress to the tape-shaped material that travels, wherein the stress applying mechanism applies a tensile stress of 300 MPa or more to the tape-shaped material and causes the tape-shaped material to travel to the first path-forming member located on a downstream side.

8. The apparatus for manufacturing a rotary electric machine protection ring according to claim 7, further comprising a cooling mechanism that cools at least a part of the material to 20°C or less, the cooling mechanism being provided in front of or at a position same as the stress applying mechanism.

9. The apparatus for manufacturing a rotary electric machine protection ring according to claim 7, further comprising a heating mechanism that heats at least a part of the tape-shaped material, the heating mechanism being provided in front of or at a position same as the stress applying mechanism.
